(19) Europäisches Patentamt

European Patent Office

Office européen des brevets

(11) **EP 1 504 188 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **03775326.6**

(22) Anmeldetag: **11.11.2003**

(51) Int Cl.:
**F02M 59/46** *(2006.01)*

(86) Internationale Anmeldenummer:
**PCT/EP2003/012536**

(87) Internationale Veröffentlichungsnummer:
**WO 2004/048771 (10.06.2004 Gazette 2004/24)**

(54) **DRUCKVENTIL MIT ZUSÄTZLICHER SPRITZVERSTELLERFUNKTION**

PRESSURE VALVE COMPRISING AN ADDITIONAL JET ADJUSTING FUNCTION

SOUPAPE DE PRESSION POURVUE D'UNE FONCTION DE REGULATION D'INJECTION SUPPLEMENTAIRE

(84) Benannte Vertragsstaaten:
**DE GB IT**

(30) Priorität: **23.11.2002 DE 10254711**

(43) Veröffentlichungstag der Anmeldung:
**09.02.2005 Patentblatt 2005/06**

(73) Patentinhaber: **Motorenfabrik Hatz GmbH & Co. KG**
**94099 Ruhstorf (DE)**

(72) Erfinder: **PRINZ-HUFNAGEL, Peter**
**94127 Neburg/Inn (DE)**

(74) Vertreter: **Grättinger & Partner (GbR)**
**Postfach 16 55**
**82306 Starnberg (DE)**

(56) Entgegenhaltungen:
**EP-A- 0 709 569       CH-A- 322 017**
**DE-A- 2 306 270       US-A- 2 704 035**
**US-A- 4 303 096**

- **PATENT ABSTRACTS OF JAPAN vol. 018, no. 237 (M-1600), 6. Mai 1994 (1994-05-06) & JP 06 024664 A (HITACHI BUILDING SYST ENG & SERVICE CO LTD), 1. Februar 1994 (1994-02-01)**

**Beschreibung**

Die vorliegende Erfindung betrifft nach ihrer Gattung ein Druckventil in Form eines Lochventils mit Gleichraumentlastung zum Einbau in eine Druckleitung zur Förderung von Kraftstoff von einem Pumpenarbeitsraum eines Pumpenelements einer Kraftstoffeinspritzpumpe zu einer Einspritzdüse einer selbstzündenden Brennkraftmaschine. Es handelt sich um ein Druckventil mit einer zusätzlichen Funktion als hydraulischer Spritzversteller.

Bei einem als bekannt vorauszusetzenden Lochventil mit Gleichraumentlastung, das in der Druckleitung zwischen einem Pumpenarbeitsraum und einer Einspritzstelle angeordnet ist, wird durch unter hohem Druck stehenden Kraftstoff ein Ventilschließglied gegen die Kraft einer Feder von seinem Ventilsitz abgehoben, wodurch das Druckventil öffnet und Kraftstoff zur Einspritzstelle strömen kann. Am Ende der Hochdruckförderung kehrt das Ventilschließglied auf seinen Sitz zurück, wobei ein Entlastungsbund durch Volumenvergrößerung in der Druckleitung für einen schnellen Druckabbau in der Druckleitung nach dem Einspritzen sorgt, so dass an der Einspritzdüse kein Kraftstoff nachtropft und dort gegebenenfalls unerwünschte Verbrennungsrückstände bildet. Ein gattungsgemäßes Druckventil ist in DE 2306270 gezeigt.

Bei selbstzündenden Verbrennungsmotoren ist der Zündverzug, d. h. die Zeit zwischen dem Beginn des Einspritzens in den Verbrennungsraum und dem Verbrennungsbeginn, nahezu unabhängig von der Drehzahl des Motors. Da der Einspritzbeginn somit stets bei in etwa dem gleichen Kurbelwellenwinkel liegt, tritt das Problem auf, dass der Kolben bei höheren Drehzahlen wegen der größeren Kolbengeschwindigkeit bei Beginn der Verbrennung immer weiter vom oberen Totpunkt entfernt ist. Die Folge ist einerseits ein erheblicher Leistungsverlust, andererseits nehmen die Abgasemissionen stark zu.

Um diese nachteiligen Effekte zu vermeiden, ist bekannt den Einspritzbeginn durch Verdrehen der Nockenwelle gegenüber der Kurbelwelle zu verstellen, zu welchem Zweck herkömmliche Motoren mechanische oder elektronische Spritzversteller aufweisen.

Die heutzutage zumeist eingesetzten mechanischen Spritzversteller weisen typischerweise ein von der Kurbelwelle angetriebenes Gehäuse auf, an welchem zwei Fliehgewichte an festen Drehpunkten drehbar gelagert sind. Die Fliehgewichte wandern bei zunehmender Drehzahl der Kurbelwelle auseinander und nehmen über Rollen eine Verstellscheibe mit, in deren Nabe die Einspritzpumpen-Nockenwelle befestigt ist. Je weiter die Fliehgewichte auseinander wandern, desto mehr wird die Verstellscheibe in Drehrichtung der Nockenwelle, d. h. in Richtung Früheinspritzung verstellt, so dass sich für Einspritzzeitpunkte nach dem oberen Totpunkt der Kolben beim Einspritzbeginn bei höheren Drehzahlen näher dem oberen Totpunkt befindet als bei niedrigeren Drehzahlen.

Nachteilig bei den herkömmlichen mechanischen Spritzverstellern ist insbesondere, dass diese Kosten verursachen und bei kleinen Motoren aus Platzgründen oftmals nicht eingesetzt werden können. Vor allem im Hinblick auf zukünftig geltende restriktive Vorschriften für die Emission von Abgasen und Geräuschen (EPA I, EPA II), welche eine Spritzverstellung unumgänglich machen, wäre es deshalb wünschenswert über alternative Möglichkeiten zur Regelung des drehzahlabhängigen Einspritzbeginns zu verfügen.

Aus der CH 322017 ist ferner eine Einspritzpumpe für beliebige Brennkraftmaschinen mit einem Druckventil bekannt, bei dem zur Einstellung bzw. Regelung der Höchst- und Leerlaufdrehzahl Kraftstoff zum Saugraum der Pumpe abgesteuert werden kann. Eine positive Anregung oder gar eine Lösung zur Beseitigung der vorstehenden Problematik wird darin nicht gegeben.

Die Aufgabe der vorliegenden Erfindung ist somit darin zu sehen, eine Vorrichtung bereitzustellen, welche in kostengünstiger und raumsparender Weise in selbstzündenden Verbrennungsmotoren bei höheren Drehzahlen einen früheren Einspritzbeginn ermöglicht. Eine derartige Vorrichtung soll insbesondere auch in kleinen Motoren, d. h. Motoren mit einem Einzelhubraum von ca. 500 cm$^3$ und weniger, bzw. einer Leistung von maximal ungefähr 20 kW, eingesetzt werden können.

Diese Aufgabe wird nach einem Vorschlag der Erfindung durch die Merkmale des unabhängigen Anspruchs 1 gelöst. Vorteilhafte Ausgestaltungen der Erfindung sind in den abhängigen Ansprüchen angegeben.

Erfindungsgemäß ist ein Druckventil in Form eines Lochventils mit Gleichraumentlastung gezeigt, welches zum Einbau in eine Druckleitung einer selbstzündenden Brennkraftmaschine zum Transport von Kraftstoff von einem Pumpenelement einer Kraftstoffeinspritzpumpe zu einer Einspritzdüse vorgesehen ist, wobei das Druckventil zusätzlich über die Funktion einer hydraulischen Spritzverstellung verfügt.

Das Druckventil umfasst in herkömmlicher Weise einen Ventilhalter, der einen düsenseitig mit der Druckleitung zu verbindenden Verbindungskanal und einen damit verbundenen Federraum mit einer darin befindlichen Ventilfeder einschließt. Ferner ist ein mit einem Dichtsitz und einer axialen Durchgangsbohrung versehener Ventilzylinder vorgesehen, der mit seinem einen Ende an dem Ventilhalter und mit seinem anderen Ende an einem den Pumpenarbeitsraum formenden Elementzylinder des Pumpenelements fluiddicht befestigt ist. Ventilhalter, Ventilzylinder und Pumpenelement sind derart angeordnet, dass die axiale Durchgangsbohrung sowohl mit dem Federraum als auch mit dem Pumpenarbeitsraum verbunden ist. Ein Ventilkörper, welcher eine mit dem Dichtsitz zusammenwirkende Dichtfläche, einen pumpenseitig der Dichtfläche angeordneten Entlastungsbund, sowie einen mit seinem einen Ende in den Pumpenarbeitsraum, und mit seinem anderen Ende pumpenseitig der Dichtfläche an der seitlichen Oberfläche des Ventilkörpers mündendenden Kraftstoffkanal umfasst, ist in der axialen Durchgangsbohrung des Ventilzylinders axial verschiebbar geführt. Der Ventilkörper wird einerseits durch die Federkraft der Ventilfeder auf seinen Dichtsitz gedrückt, andererseits kann er durch den pumpenseitigen Kraftstoffdruck von seinem Dichtsitz abgehoben werden, wodurch das Druckventil in eine düsenseitig hin offene Öffnungsstellung überführt wird.

Charakteristisch für die Erfindung ist, dass der Ventilkörper wenigstens eine vom Kraftstoffkanal abgehende erste Absteuerbohrung aufweist, und dass der Ventilzylinder eine der Absteuerbohrung des Ventilkörpers zugeordnete zweite Absteuerbohrung aufweist, wobei die Absteuerbohrungen in der Schließstellung des Druckventils verbunden sind oder während des Übergangs in dessen Öffnungsstellung verbunden werden können, um so eine Verbindung zwischen dem Kraftstoffkanal und einem Saugraum des Pumpenelements herzustellen.

Die Absteuerbohrungen ermöglichen somit eine Absteuerung von Kraftstoff aus dem Kraftstoffkanal in den Saugraum des Pumpenelements, wobei die Absteuerbohrungen aufgrund ihres stets vorhandenen Strömungswiderstands als Drossel wirken. Bekanntlich ist der Strömungswiderstand in den Absteuerbohrungen von der Strömungsgeschwindigkeit und somit von der Pumpenstempelgeschwindigkeit abhängig. Die Pumpenstempelgeschwindigkeit ist ihrerseits eine Funktion der Hublage, d. h. der Form des Pumpennockens, und der Drehzahl. Genauer gilt für eine im Querschnitt kreisförmige Absteuerbohrung die folgende Beziehung für das zeitliche Durchflussvolumen eines idealisierten, zunächst als strömungswiderstandsfrei angenommenen Fluids:

$$\Delta V = v \Delta t \cdot D^2 \Pi / 4 \qquad . \qquad (1)$$

worin V das Durchflussvolumen, v die Strömungsgeschwindigkeit bzw. Pumpenstempelgeschwindigkeit und D der Durchmesser der Absteuerbohrung bezeichnen.

Wie aus obigem Zusammenhang (1) ersichtlich ist, kann durch eine Variation der Pumpenstempelgeschwindigkeit, bzw. des Durchmessers der Absteuerbohrung, die Menge des in der Zeiteinheit abgesteuerten Kraftstoffs verändert werden.

Tatsächlich steigt jedoch mit zunehmender Pumpenstempelgeschwindigkeit auch der Strömungswiderstand stark an, welcher die Menge des abgesteuerten Kraftstoffs verringert. Genauer gilt hier der folgende Zusammenhang für den Druckabfall entlang der Absteuerbohrung:

$$\Delta p \approx \eta \cdot l \cdot v \cdot 1 / D^2 \qquad (2)$$

worin p der Kraftstoffdruck, $\eta$ die Viskosität, I die Länge der Absteuerbohrung und v die Strömungsgeschwindigkeit bezeichnen.

Wie aus obigem Zusammenhang (2) ersichtlich ist, ist neben der Viskosität des Kraftstoffs und der Länge der Absteuerbohrung die Strömungsgeschwindigkeit, d. h. die Pumpenstempelgeschwindigkeit die entscheidende Einflussgröße bei der Variation des Strömungswiderstands. Ferner gilt, dass $\Delta p$ umgekehrt proportional zum Quadrat des Durchmessers D ist.

Ausgehend von einer niedrigen Hublage bei beginnendem Förderhub, erhöht sich mit zunehmender Hublage, abhängig von der Nockenform, die Pumpenstempelgeschwindigkeit und somit das durch die Absteuerbohrungen transportierte zeitliche Durchflussvolumen. Gleichzeitig steigt mit zunehmender Hublage (d. h. zunehmender Pumpenstempelgeschwindigkeit) aber auch der Strömungswiderstand an. Mit anderen Worten, der Druckabfall entlang der Absteuerbohrung nimmt mit steigender Hublage zu. Wenn der Druckabfall den herrschenden Standdruck im System, vermehrt um den Druck, der sich aus der Kraft ergibt, die die Ventilfeder auf den Ventilkörper ausübt, gerade übersteigt, so hebt der Ventilkörper von seinem Dichtsitz ab, die Absteuerbohrungen schließen, und das Druckventil geht in seine Öffnungsstellung über. Nun findet ein gewöhnlicher Förder- und Einspritzvorgang statt - allerdings bei einer höheren Hublage und damit zu einem späteren Einspritzzeitpunkt. Im Vergleich zu einem herkömmlichen Druckventil ohne die zusätzliche Funktion einer hydraulischen Spritzverstellung gelingt es also durch das erfindungsgemäße Druckventil, den Einspritzzeitpunkt insgesamt auf eine höhere Hublage, d. h. einen größeren Kurbelwellenwinkel zu verschieben.

Wie oben bereits ausgeführt wurde, ist die Pumpenstempelgeschwindigkeit auch eine Funktion der Drehzahl, wobei die Pumpenstempelgeschwindigkeit mit ansteigender Drehzahl zunimmt. Betrachtet für eine gleiche Hublage, folgt hieraus, dass bei einer höheren Drehzahl ein höherer Strömungswiderstand vorliegt, d. h. dass weniger Kraftstoff durch die Absteuerbohrungen abgesteuert wird und nur eine geringere Verschiebung des Einspritzzeitpunkts erfolgt;

umgekehrt gilt, dass bei einer niedrigeren Drehzahl ein geringerer Strömungswiderstand vorliegt, d. h. dass vergleichsweise viel Kraftstoff durch die Absteuerbohrungen abgesteuert wird und eine größere Verschiebung des Einspritzzeitpunkts erfolgt. Somit bewirkt das erfindungsgemäße Druckventil bei einer höheren Drehzahl einen früheren Einspritzbeginn als bei einer niedrigeren Drehzahl - entsprechend einer Vorverstellung des Kurbelwellenwinkels bei einem herkömmlichen mechanischen Spritzversteller.

Durch das erfindungsgemäße Druckventil kann insofern in vorteilhafter Weise auf die Verwendung eines mechanischen Spritzverstellers verzichtet werden, wodurch Kosten und Platz eingespart werden. Insbesondere können hierdurch auch kleine Motoren mit der Funktion eines Spritzverstellers versehen werden, bei denen bislang ein mechanischer Spritzversteller - ungeachtet seiner Kosten - aus Platzgründen nicht eingesetzt werden konnte. Typischerweise wird durch das erfindungsgemäße Druckventil eine Verschiebung des Einspritzbeginns entsprechend einer Vorverstellung der Einspritznockenwelle des Verbrennungsmotors in einem Bereich zwischen 0 und 10° Kurbelwellenwinkel bewirkt.

Bei einer vorgegebenen Auslegung des Motors kann durch eine Variation des Strömungswiderstands, bzw. der Drosselwirkung bei der Absteuerung des Kraftstoffs, eine geeignete Verschiebung des Einspritzzeitpunktes bei höheren bzw. niedrigeren Drehzahlen erreicht werden. Aus obigem Zusammenhang (2) wird klar, dass der Strömungswiderstand insbesondere von dem Durchmesser und der Länge der Absteuerbohrungen im Druckventil abhängt. Um eine geeignete Verschiebung des Einspritzzeitpunktes zu erhalten, genügt es somit, bei einer vorgegebenen Motorauslegung eine Variation des Durchmessers bzw. der Länge der Absteuerbohrungen vorzunehmen.

Der Erfindung ist jedoch noch ein weiterer wesentlicher Vorteil zu eigen. Durch die abgesteuerte Kraftstoffmenge reduziert sich die tatsächlich in den Brennraum eingespritzte Kraftstoffmenge. Da bei einer niedrigeren Drehzahl mehr Kraftstoff durch die Absteuerbohrungen abgesteuert wird, als bei einer höheren Drehzahl, führt dies dazu, dass bei fallender Drehzahl eine Minus-Angleichung der in den Brennraum eingespritzten Kraftstoffmenge bewirkt wird. Eine geeignete Auslegung vorausgesetzt, lässt sich hierdurch bei einer konstanten Regellage die Einstellung eines gewünschten Mengenverlaufs der in den Brennraum eingespritzten Kraftstoffmenge erreichen.

Die Durchmesser der Absteuerbohrungen von Ventilkörper und Ventilzylinder können gleich groß sein. Um jedoch den Einfluss der im Vergleich zum Ventilzylinder kurzen Absteuerbohrung des Ventilkörpers möglichst gering zu halten, und im Hinblick auf eine möglichst geringe Streubreite des Strömungswiderstands die hauptsächliche Absteuerwirkung auf die vergleichsweise lange Bohrung des Ventilzylinders zu übertragen, ist es vorteilhaft, wenn die Querschnittsfläche der Absteuerbohrung des Ventilkörpers größer ist als die Querschnittsfläche der Absteuerbohrung des Ventilzylinders. Typische Durchmesser der Absteuerbohrungen liegen im Bereich von 0,1 bis 0,9 mm. Insbesondere kann der Durchmesser der Absteuerbohrung des Ventilkörpers 0,7 mm betragen, während der Durchmesser der Absteuerbohrung des Ventilzylinders 0,4 mm beträgt.

Die Absteuerbohrungen von Ventilkörper und Ventilzylinder können in Schließstellung des Druckventils koaxial sein. Bei einer besonders vorteilhaften Ausführungsform der Erfindung sind die Absteuerbohrungen in Schließstellung des Druckventils jedoch in axialer Richtung versetzt, dergestalt, dass die Absteuerbohrung des Ventilzylinders in Richtung zur Einspritzdüse hin versetzt ist und keine Verbindung zur Absteuerbohrung des Ventilkörpers vorliegt. Die Absteuerbohrungen von Ventilkörper und Ventilzylinder werden also erst während des Übergangs des Druckventils in dessen Öffnungsstellung verbunden. Dies bewirkt, dass vor einer Verbindung der Absteuerbohrungen von Ventilkörper und Ventilzylinder, d. h. vor der Freigabe der Fluidverbindung, ein geringer Vorhub mit einer geringen Voreinspritzung stattfindet, so dass ein stabiles Leerlaufverhalten und ein einwandfreies Startverhalten sichergestellt ist. Zusätzlich kann der Entlastungsbund vorzugsweise mit einem Anschliff versehen, um die Menge der Voreinspritzung zu regulieren.

Bei einer weiteren vorteilhaften Ausführungsform der Erfindung ist die Absteuerbohrung des Ventilzylinders mit einem Druckhalteventil versehen. Das Druckhalteventil umfasst einen Dichtsitz und ein eine mit dem Dichtsitz zusammenwirkenden Dichtfläche aufweisendes Dichtelement, wobei das Dichtelement einerseits durch die Federkraft einer Ventilfeder auf seinen Dichtsitz gedrückt wird, und andererseits durch den Druck des Kraftstoffs in der Absteuerbohrung von seinem Dichtsitz abgehoben werden kann, wodurch das Druckhalteventil in eine zum Saugraum des Pumpenelements hin offene Öffnungsstellung übergeht und Kraftstoff von der Absteuerbohrung in den Saugraum des Pumpenelements strömt.

Wie bei der oben betrachteten axialen Versetzung der Enden der Absteuerbohrungen von Ventilkörper und Ventilzylinder, gestattet das Druckhalteventil eine Vorförderung von Kraftstoff, solange der Kraftstoffdruck in der Absteuerbohrung nicht ausreicht, das Druckhalteventil zu öffnen. Bei einer geeigneten Auslegung der Federkraft, d. h. des Öffnungsdrucks des Druckhalteventils, kann durch ein Unterbinden der Absteuerung von Kraftstoff durch die Absteuerbohrung ein stabiles Leerlauf- und Startverhalten erreicht werden. Typische Druckwerte für den Öffnungsdruck des Druckhalteventils liegen im Bereich von 20 bis 40 bar. Insbesondere kann durch das Druckhalteventil eine Absteuerung von Kraftstoff unterhalb einer typischen Drehzahl von ca. 1500 1/min unterbunden werden.

Eine weitere vorteilhafte Ausführungsform der Erfindung sieht vor, dass der Ventilzylinder von einer Hülse dicht umgeben ist, welche um den Ventilzylinder drehbar gelagert ist. Die Hülse ist hierbei mit wenigstens einer Drosselbohrung versehen, deren Querschnittsfläche kleiner als die Querschnittsfläche der Absteuerbohrung des Ventilzylinders ist. Die Drosselbohrung kann durch Drehen der Hülse in Gegenüberstellung zur Mündung der Absteuerbohrung gebracht werden und die Absteuerung des Kraftstoffs drosseln. Verfügt die Hülse über eine Mehrzahl von Drosselbohrungen, deren Querschnittsflächen abnehmen, so kann durch Verdrehen der Hülse, wodurch eine Drosselbohrung in Gegenüberstellung zum Ende der Absteuerbohrung gebracht wird, eine gewünschte Drosselwirkung eingestellt werden. Ebenso kann durch Verschließen der Absteuerbohrung eine Absteuerung von Kraftstoff gänzlich unterbunden werden, so dass bei niedrigen Drehzahlen ein stabiles Leerlauf- und Startverhalten erreicht werden kann.

Bei einer Variante der obigen Ausführungsform mündet die Absteuerbohrung des Ventilzylinders in eine Absteuerbohrung des Elementzylinders, und der Elementzylinder des Pumpenelements ist von einer drehbar gelagerten Hülse dicht umgeben, die mit wenigstens einer Drosselbohrung versehen ist, deren Querschnittsfläche kleiner als die Querschnittsfläche der Absteuerbohrung des Elementzylinders ist.

Bei den erfindungsgemäßen Ausführungsformen, welche eine Hülse mit Drosselbohrungen aufweisen, wird die Stellung der Hülse vorzugsweise in Abhängigkeit der Hublage und der Drehzahl bzw. Last durch ein Regel- und Stellglied gesteuert.

Es sei bemerkt, dass bei den Ausführungsformen der Erfindung, bei denen durch ein Unterbinden bzw. Hemmen der Absteuerung von Kraftstoff bei niedrigen Drehzahlen ein sicheres Leerlauf- und Startverhalten erreicht werden kann, durch die geringere Absteuerung von Kraftstoff der Effekt der Vorverstellung des Einspritzbeginns bei höheren Drehzahlen kleiner ausfällt. Im Hinblick auf ein einwandfreies Laufverhalten des Motors ist deshalb ein Kompromiss zwischen einer genügenden Absteuerung von Kraftstoff bei niedrigen Drehzahlen im Hinblick auf eine hinreichende Vorverstellung des Einspritzbeginns bei höheren Drehzahlen, und eine Unterbindung bzw. Hemmung der Absteuerung von Kraftstoff bei niedrigen Drehzahlen zur Erzielung eines sicheren Leerlauf- und Startverhaltens anzustreben.

Die Erfindung wird nun anhand der Beschreibung mehrerer Ausführungsbeispiele näher erläutert, wobei Bezug auf die beigefügten Zeichnungen genommen wird. Es zeigen

Fig. 1    einen Querschnitt in axialer Richtung durch einen Ventilkörper (oben) und einen Ventilzylinder (unten) eines erfindungsgemäßen Druckventils;

Fig. 2    einen Querschnitt in axialer Richtung durch eine Ausführungsform des erfindungsgemäßen Druckventils mit koaxialen Absteuerbohrungen von Ventilkörper und Ventilzylinder in Schließ- und Öffnungsstellung;

Fig. 3    einen Querschnitt in axialer Richtung durch eine weitere Ausführungsform des erfindungsgemäßen Druckventils mit zueinander versetzten Absteuerbohrungen von Ventilkörper und Ventilzylinder in Schließ- und Öffnungsstellung;

Fig. 4    einen Querschnitt in axialer Richtung durch eine weitere Ausführungsform des erfindungsgemäßen Druckventils mit koaxialen Absteuerbohrungen von Ventilkörper und Ventilzylinder und einem Druckhalteventil;

Fig. 5    einen Querschnitt in axialer Richtung durch eine weitere Ausführungsform des erfindungsgemäßen Druckventils mit koaxialen Absteuerbohrungen von Ventilkörper und Ventilzylinder und einer den Ventilzylinder umgebenden Drosselhülse;

Fig. 6    einen Querschnitt in axialer Richtung durch eine weitere Ausführungsform des erfindungsgemäßen Druckventils mit einer den Pumpenelementzylinder umgebenden Drosselhülse.

Fig. 7    einen Querschnitt in axialer Richtung durch eine weitere Ausführungsform des erfindungsgemäßen Druckventils, welche der in Fig. 2 gezeigten Ausführungsform entspricht, mit Ausnahme, dass der Ventilkörper zusätzlich mit einem Gleichdruckventil ausgestattet ist.

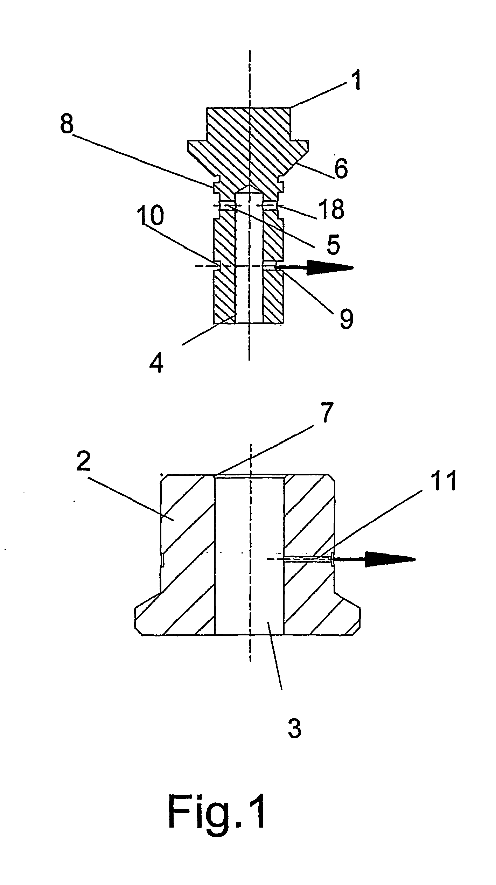

Zunächst sei Fig. 1 betrachtet, worin ein Querschnitt in axialer Richtung durch einen Ventilkörper 1 und einen Ventilzylinder 2 eines erfindungsgemäßen Druckventils gezeigt ist. Der Ventilkörper 1 ist mit einer Dichtfläche 6 in Form eines Dichtkegels, einem Entlastungsbund 8 und einem Kraftstoffkanal, bestehend aus einer axialen Bohrung 4 und einer Querbohrung 5, versehen. Das düsenseitige Ende 18 des Kraftstoffkanals mündet in eine den Umfang des Ventilkörpers umlaufende Ringnut. Erfindungsgemäß ist der Ventilkörper 1 stromaufwärts der düsenseitigen Mündung 18 der Querbohrung 5 des Kraftstoffkanals mit einer Absteuerbohrung 9 zur Absteuerung von Kraftstoff aus der axialen Bohrung 4 des Kraftstoffkanals versehen. Die axiale Bohrung hat einen Durchmesser von 0,7 mm. Sie mündet in eine den Umfang des Ventilkörpers umlaufende Verteilerringnut 10.

Der Ventilzylinder 2 weist eine axiale Bohrung 3 zur Aufnahme des Ventilkörpers 1, sowie einen Dichtsitz 7 zum Zusammenwirken mit der Dichtfläche 6 des Ventilkörpers 1 auf. Erfindungsgemäß ist der Ventilzylinder 2 zudem mit einer, einerseits in der axialen Bohrung 3, und andererseits auf der Außenfläche des Ventilzylinders mündenden Absteuerbohrung 11 zur Absteuerung von Kraftstoff versehen.

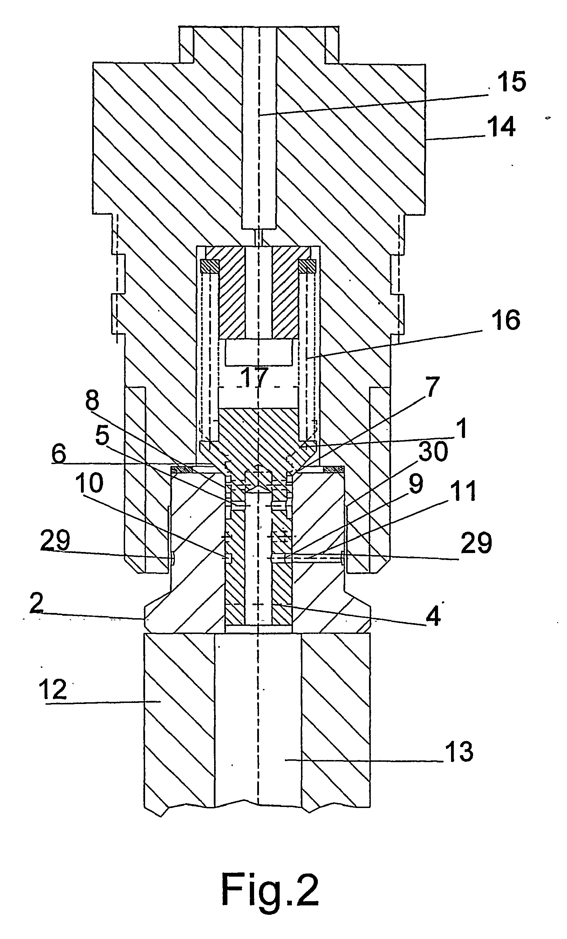

Nun sei Fig. 2 betrachtet, worin ein Querschnitt in axialer Richtung durch eine Ausführungsform des erfindungsgemäßen Druckventils in Schließ- und Öffnungsstellung gezeigt ist. Das Druckventil umfasst einen Ventilhalter 14, der einen düsenseitig mit der Druckleitung zu verbindenden Verbindungskanal 15 und einen damit verbundenen Federraum 17 mit einer darin befindlichen Ventilfeder 16 einschließt. Ferner umfasst das Druckventil den mit einem Dichtsitz 7 und der axialen Durchgangsbohrung 3 versehenen Ventilzylinder 2, der mit seinem einen Ende an dem Ventilhalter 14 und mit seinem anderen Ende an einem den Pumpenarbeitsraum 13 formenden Elementzylinder 12 des Pumpenelements fluiddicht befestigt ist. Die axiale Durchgangsbohrung 3 ist einerseits mit dem Federraum 17 und andererseits mit dem Pumpenarbeitsraum 13 verbunden. In der axialen Durchgangsbohrung 3 des Ventilzylinders 2 axial verschiebbar geführt, ist der Ventilkörper 1, dessen Dichtfläche 6 in der Schließstellung des Druckventils dem Dichtsitz 7 des Ventilzylinders 2 anliegt. Der Ventilkörper 1 wird einerseits durch die Federkraft der Ventilfeder 16 auf seinen Dichtsitz 7 gedrückt, und kann andererseits durch den pumpenseitigen Kraftstoffdruck von seinem Dichtsitz abgehoben werden, wodurch das Druckventil in eine düsenseitig hin offene Öffnungsstellung (in der Zeichnung angedeutet) überführt wird.

Erfindungsgemäß weisen Ventilkörper 1 und Ventilzylinder 2 koaxial verbundene Absteuerbohrungen 9, 11 auf, die in der Schließstellung des Druckventils eine Verbindung zwischen dem Kraftstoffkanal 4, 5 und einem Saugraum des Pumpenelements erstellen. Genauer mündet die Absteuerbohrung 9 des Ventilkörpers 1 in eine Verteiler-Ringnut 10, während die Absteuerbohrung 11 des Ventilzylinders 2 in eine Verteiler-Ringnut 29 mündet. Die Verteiler-Ringnut 29 mündet ihrerseits in einen Spaltraum 30 zwischen äußerer Wand des Ventilzylinders 2 und Innenwand des Ventilhalters 14, welcher in Verbindung mit dem Saugraum des Pumpenelements steht, so dass der Kraftstoff von dem Kraftstoffkanal 4, 5 in den Saugraum des Pumpenelements abgeleitet wird. Bei Übergang in die Öffnungsstellung des Druckventils hebt die Dichtfläche 6 von ihrem Dichtsitz 7 ab. Gleichzeitig verschieben sich die Absteuerbohrungen 9, 11 in axialer Richtung gegeneinander, wodurch die Verbindung zwischen den beiden Absteuerbohrungen 9, 11 verschlossen wird. Die Absteuerbohrung 9 des Ventilkörpers 1 hat einen Durchmesser von 0,7 mm, während die Absteuerbohrung 11 des Ventilzylinders 2 einen Durchmesser von 0,4 mm aufweist. Die hauptsächliche Drosselung wird somit durch die Absteuerbohrung 11 des Ventilzylinders 2 bewirkt.

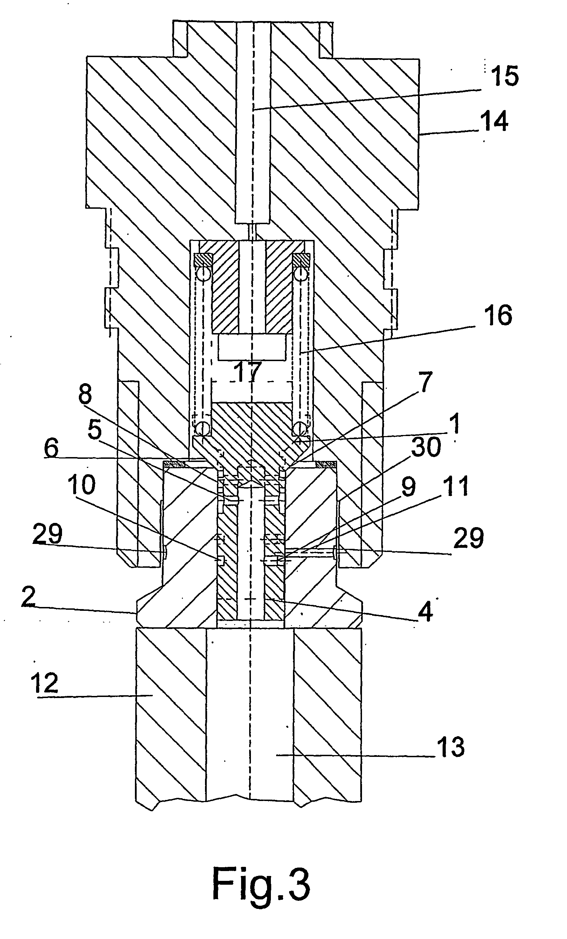

Nun sei Fig. 3 betrachtet, worin ein Querschnitt in axialer Richtung durch eine weitere Ausführungsform des erfindungsgemäßen Druckventils in Schließ- und Öffnungsstellung gezeigt ist. Um Wiederholungen zu vermeiden, werden nur die Unterschiede zu der in Fig. 2 gezeigten Ausführungsform erläutert werden. Diese Ausführungsform unterscheidet sich von der vorigen Ausführungsform insofern, als die Absteuerbohrungen 9, 11 in Schließstellung des Druckventils in axialer Richtung zueinander versetzt sind, wobei die Absteuerbohrung 11 des Ventilzylinders 2 gegen die Absteuerbohrung 9 des Ventilkörpers 1 in Richtung zur Einspritzdüse hin versetzt ist. Die Absteuerbohrungen von Ventilkörper und Ventilzylinder sind hierbei soweit gegeneinander versetzt, dass keine Verbindung besteht. Wie eingangs bereits geschildert wurde, wird hierdurch eine Vorförderung von Kraftstoff zwecks Stabilisierung des Leerlauf- und Startverhaltens des Motors bewirkt. Beim Übergang des Druckventils in seine Öffnungsstellung (in der Zeichnung angedeutet), gelangen die einander gegenüberliegenden Enden der Absteuerbohrungen 9, 11 in Gegenüberstellung, so dass die Absteuerbohrungen 9, 11 miteinander verbunden sind und eine Verbindung zwischen dem Kraftstoffkanal 4 und dem Saugraum des Pumpenelements vorliegt. Bei erreichter Öffnungsstellung des Druckventils sind die beiden Absteueröffnungen in axialer Richtung soweit gegeneinander versetzt, dass deren Verbindung unterbrochen ist und kein Kraftstoff mehr in den Saugraum des Pumpenelements abgeleitet werden kann.

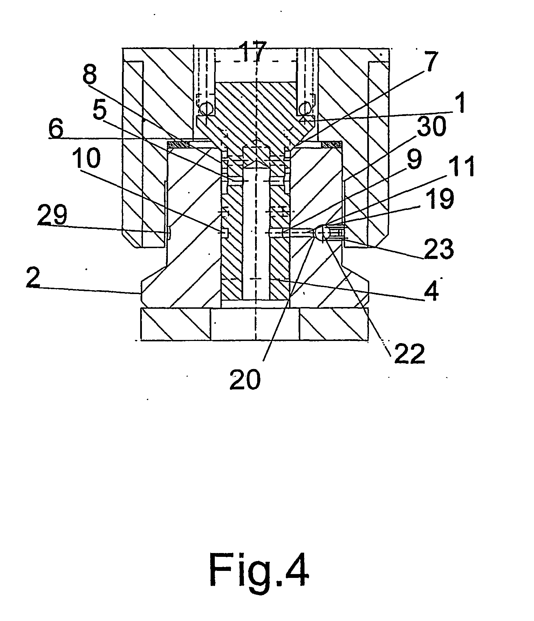

Bei einer weiteren vorteilhaften Ausführungsform der Erfindung, welche in Fig. 4 gezeigt ist, ist die Absteuerbohrung 11 des Ventilzylinders mit einem Druckhalteventil 19 versehen. Das Druckhaltventil umfasst einen Dichtsitz 20 und ein eine mit dem Dichtsitz 20 zusammenwirkenden Dichtfläche 21 aufweisendes Dichtelement 22 in Form einer Kugel. Die Kugel wird einerseits durch die Federkraft einer Ventilfeder 23 auf seinen Dichtsitz 20 gedrückt wird, und kann andererseits durch den Druck des Kraftstoffs in der Absteuerbohrung 11 von seinem Dichtsitz 20 abgehoben werden, wodurch das Druckhalteventil in eine zum Saugraum des Pumpenelements hin offene Öffnungsstellung übergeht und Kraftstoff von der Absteuerbohrung in den Saugraum des Pumpenelements strömt. Die Absteuerbohrung des Ventilzylinders hat stromaufwärts des Druckhalteventils einen Durchmesser von ca. 0,7 mm; die Kugel hat einen Durchmesser von ungefähr 1 mm; der Öffnungsdruck des Druckhalteventils liegt im Bereich von ungefähr 20 bis 30 bar, entsprechend einer Federkraft der Ventilfeder von ungefähr 25 bis 38 N.

Wie eingangs bereits geschildert wurde, kann durch das Druckhalteventil bei geeigneter Auslegung eine Absteuerung von Kraftstoff bei niedriger Hublage bzw. geringer Drehzahl unterbunden werden, wodurch ein stabiles Start- und Leerlaufverhalten bei niedrigen Drehzahlen sichergestellt werden kann.

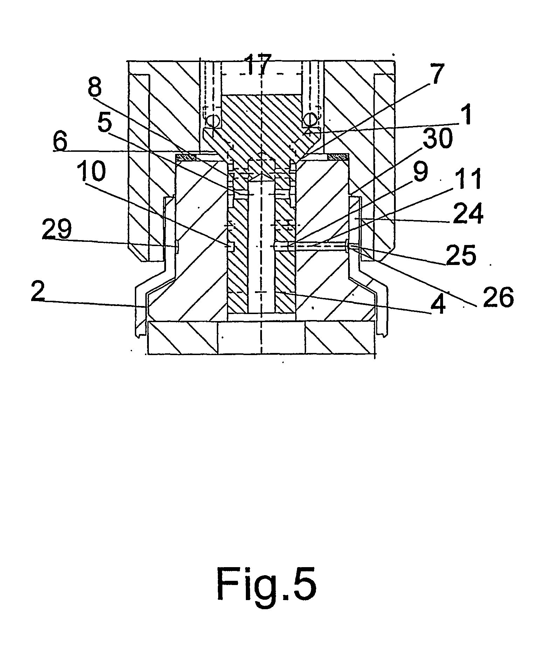

Bei einer weiteren vorteilhaften Ausführungsform der Erfindung, welche in Fig. 5 dargestellt ist, ist der Ventilzylinder 2 von einer Hülse 24, welche mit Drosselbohrungen 25 versehen ist, dicht umgeben und um den Ventilzylinder 2 um die Zylinderachse drehbar gelagert. Die Querschnittsflächen der Drosselbohrungen sind kleiner als die Querschnittsfläche der Absteuerbohrung 11 des Ventilzylinders 2, so dass diese eine Drosselwirkung entfalten. Die verschiedenen Drosselbohrungen 25, die eine abnehmende Querschnittsfläche aufweisen, können durch Drehen der Hülse jeweils in Gegenüberstellung zur Mündung 26 der Absteuerbohrung 11 gebracht werden. Ein von der Hublage bzw. Drehzahl abhängige Regelung der Stellung der Hülse, bei welcher bei niedriger Hublage bzw. niedriger Drehzahl durch eine Drosselbohrung mit geringerer Querschnittsfläche eine stärkere Drosselung erfolgt, kann durch ein (nicht dargestelltes) Regel- und Stellglied bewerkstelligt werden. Beim Übergang in Öffnungsstellung (gestrichelt gezeichnet) des Druckventils werden die Absteuerbohrungen von Ventilkörper und Ventilzylinder unter Verlust ihrer Verbindung zueinander in axialer Richtung versetzt.

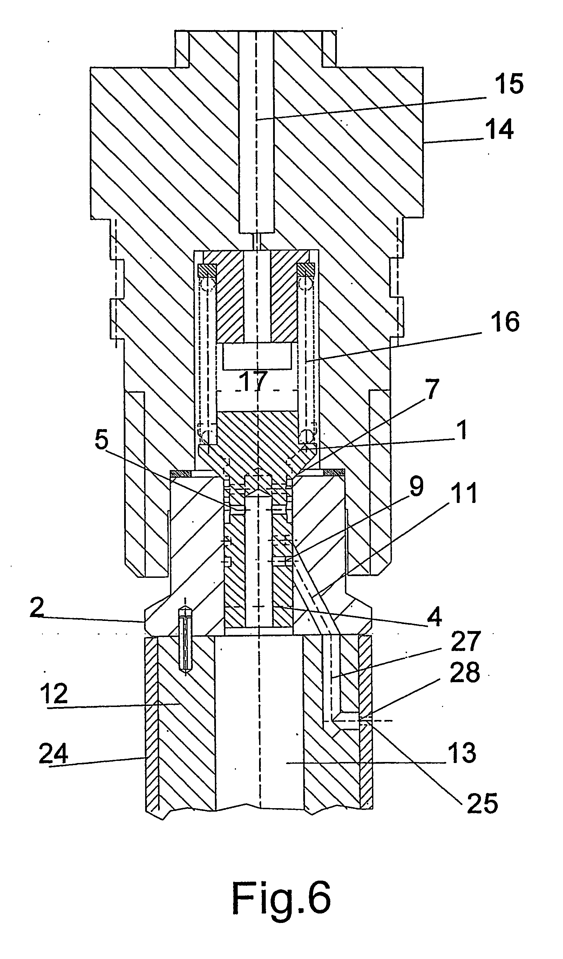

Die in Fig. 6 dargestellte erfindungsgemäße Variante der in Fig. 5 gezeigten Ausführungsform, unterscheidet sich von der Ausführungsform von Fig. 5 insofern als der Elementzylinder 12 von der mit Drosselbohrungen 25 versehenen, drehbar gelagerten Hülse 24 dicht umgeben ist. Zusätzlich mündet die Absteuerbohrung 11 des Ventilzylinders 2 in eine Absteuerbohrung 27 des Elementzylinders 12, wobei eine Drosselbohrung 25 durch Drehen der Hülse 24 in Gegenüberstellung zur Mündung 28 der Absteuerbohrung 27 des Elementzylinders 12 gebracht werden kann. Beim Übergang in Öffnungsstellung (in der Zeichnung angedeutet) des Druckventils werden die Absteuerbohrungen von Ventilkörper und Ventilzylinder unter Verlust ihrer Verbindung zueinander in axialer Richtung versetzt.

Wie schon bei den obigen erfindungsgemäßen Ausführungsformen mit einer axialen Versetzung der Absteuerbohrungen bzw. Einsatz eines Druckhalteventils, kann bei den erfindungsgemäßen Ausführungsformen, welche die Verwendung einer Hülse mit Drosselbohrungen vorsehen, bei geeigneter Auslegung eine Absteuerung von Kraftstoff bei niedriger Hublage bzw. geringer Drehzahl unterbunden werden, wodurch ein stabiles Start- und Leerlaufverhalten bei niedrigen Drehzahlen sichergestellt werden kann.

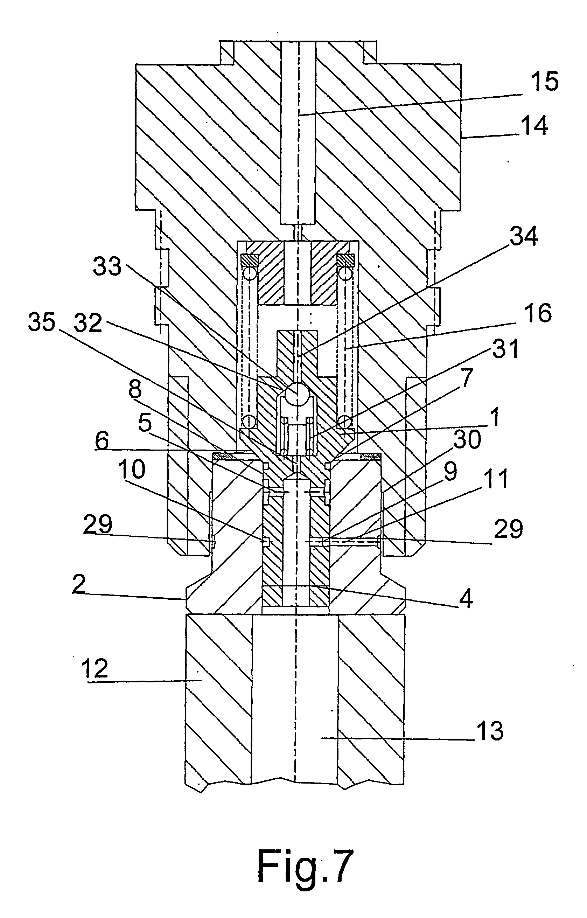

Die in Fig. 7 dargestellte Variante des erfindungsgemäßen Druckventils entspricht jener von Fig. 2, mit Ausnahme, dass der Ventilkörper 1 zusätzlich mit einem Gleichdruckentlastungsventil ausgestattet ist. Um Wiederholungen zu vermeiden, erfolgt hier nur eine Beschreibung des Gleichdruckentlastungsventils. Das Gleichdruckentlastungsventil umfasst ein Dichtelement in Form einer Ventilkugel 32, welche mittels einer Ventilfeder 31 auf einen Dichtkegelsitz 33 gedrückt wird. Das Gleichdruckentlastungsventil ist einerseits über einen Verbindungskanal 34 mit dem Federraum 17 der Ventilfeder 16 fluidleitend verbunden; andererseits ist das Gleichdruckentlastungsventil über einen weiteren Verbindungskanal 35 mit der axialen Bohrung 4 des Kraftstoffkanals des Ventilkörpers fluidleitend verbunden. Das Gleichdruckventil ist so gerichtet, dass es in Förderrichtung des Kraftstoffs schließt und in Richtung des Kraftstoffrücklaufs öffnet. Insofern dient das Gleichdruckentlastungsventil einem Druckabbau in der Druckleitung nach dem Einspritzen. Der Druckabbau erfolgt zunächst durch die druckentlastende Wirkung des Entlastungsbunds 8; eine weitere druckentlastende Wirkung wird durch das Gleichdruckentlastungsventil erreicht. Durch das Gleichdrukkentlastungsventil wird insbesondere erreicht, dass für jeden Einspritzvorgang ein gleicher Standdruck (Restdruck) in der Druckleitung gewährleistet werden kann. Die Höhe des Standdrucks hängt hierbei von der Federkraft der Ventilfeder 31 ab. In vorteilhafter Weise können durch das Gleichdruckentlastungsventil somit Schwankungen des Standdrucks in der Druckleitung und hierdurch bedingte Schwankungen der Einspritzmenge des Kraftstoffs vermieden werden. Das Gleichdruckentlastungsventil ist vor allem im unteren Lastbereich bzw. im unteren Drehzahlbereich wirksam.

Bezugszeichenliste

| | |
|---|---|
| 1 | Ventilkörper |
| 2 | Ventilzylinder |
| 3 | axiale Bohrung |
| 4 | axiale Bohrung des Kraftstoffkanals |
| 5 | Querbohrung des Kraftstoffkanals |
| 6 | Dichtfläche |
| 7 | Dichtsitz |
| 8 | Entlastungsbund |
| 9 | Absteuerbohrung des Ventilkörpers |
| 10 | Verteilerringnut des Ventilkörpers |
| 11 | Absteuerbohrung des Ventilzylinders |
| 12 | Elementzylinder |
| 13 | Pumpenarbeitsraum |
| 14 | Ventilhalter |
| 15 | Verbindungskanal |
| 16 | Ventilfeder |
| 17 | Federraum |
| 18 | düsenseitige Mündung des Kraftstoffkanals |
| 19 | Druckhalteventil |
| 20 | Dichtsitz |
| 21 | Dichtfläche |
| 22 | Dichtelement |
| 23 | Ventilfeder |
| 24 | Hülse |
| 25 | Drosselbohrung |

26   Mündung der Absteuerbohrung des Ventilzylinders
27   Drosselbohrung
28   Mündung der Absteuerbohrung des Elementzylinders
29   Verteilerringnut des Ventilzylinders
30   Spaltraum
31.  Ventilfeder des Gleichdruckentlastungsventils
32.  Kugel des Gleichdruckentlastungsventils
33.  Kegelsitz des Gleichdruckentlastungsventils
34.  Verbindungskanal
35.  Verbindungskanal

## Patentansprüche

**1.** Druckventil einer Kraftstoffeinspritzpumpe in Form eines Lochventils mit Gleichraumentlastung zum Einbau in eine Druckleitung zur Förderung von Kraftstoff von einem Pumpenarbeitsraum eines Pumpenelements einer Kraftstoffeinspritzpumpe zu einer Einspritzdüse einer selbstzündenden Brennkraftmaschine, welches umfasst:

- einen Ventilhalter (14), der einen düsenseitig mit der Druckleitung zu verbindenden Verbindungskanal (15) und einen mit diesem verbundenen Federraum (17) mit einer darin befindlichen Ventilfeder (16) umfasst,
- einen mit einem Dichtsitz (7) und einer axialen Durchgangsbohrung (3) versehenen Ventilzylinder (2), der mit seinem einen Ende an dem Ventilhalter (14) und mit seinem anderen Ende an einem den Pumpenarbeitsraum (13) formenden Elementzylinder (12) des Pumpenelements fluiddicht befestigt ist, derart, dass die axiale Durchgangsbohrung (3) mit dem Federraum (17) und mit dem Pumpenarbeitsraum (13) verbunden ist,
- einen Ventilkörper (1), welcher eine mit dem Dichtsitz (7) zusammenwirkende Dichtfläche (6), einen pumpenseitig der Dichtfläche (6) angeordneten Entlastungsbund (8), sowie einen mit seinem einem Ende in den Pumpenarbeitsraum (13), und mit seinem anderen Ende pumpenseitig der Dichtfläche (6) an der seitlichen Oberfläche des Ventilkörpers (1) mündenden Kraftstoffkanal (4, 5) umfasst, wobei der Ventilkörper (1) in der Durchgangsbohrung (3) des Ventilzylinders (2) axial verschiebbar geführt ist, einerseits durch die Federkraft der Ventilfeder (16) auf seinen Dichtsitz (7) gedrückt wird, und andererseits durch den pumpenseitigen Kraftstoffdruck von seinem Dichtsitz (7) abgehoben werden kann, wodurch das Druckventil von seiner Schließstellung in seine düsenseitig hin offene Öffnungsstellung überführt wird,

**dadurch gekennzeichnet,**
**dass** der Ventilkörper (1) wenigstens eine vom Kraftstoffkanal (4, 5) abgehende erste Absteuerbohrung (9) aufweist, und dass der Ventilzylinder (2) eine der Absteuerbohrung (9) des Ventilkörpers (1) zugeordnete zweite Absteuerbohrung (11) aufweist, wobei die Kraftstoffströmung durch die Absteuerbohrungen (9, 11) gedrosselt wird, wobei die Absteuerbohrungen (9, 11) in der Schließstellung des Druckventils verbunden sind oder während des Übergangs in die Öffnungsstellung verbunden werden können und eine Verbindung zwischen dem Kraftstoffkanal (4, 5) und einem Saugraum des Pumpenelements herstellen, **derart, dass** bei beginnendem Förderhub des Pumpenelements, bei einer niedrigeren Drehzahl der Brennkraftmaschine, mehr Kraftstoff durch die Absteuerbohrungen (9, 11) abgesteuert wird, als bei einer höheren Drehzahl, so dass das Druckventil zusätzlich über die Funktion einer hydraulischen Spritzverstellung verfügt.

**2.** Druckventil nach Anspruch 1,
**dadurch gekennzeichnet,**
**dass** die Absteuerbohrungen (9, 11) von Ventilkörper (1) und Ventilzylinder (2) in Schließstellung des Druckventils koaxial sind.

**3.** Druckventil nach Anspruch 1,
**dadurch gekennzeichnet,**
**dass** in Schließstellung des Druckventils die Absteuerbohrung (11) des Ventilzylinders (2) bezüglich der Absteuerbohrung (9) des Ventilkörpers (1) in axialer Richtung zur Einspritzdüse hin versetzt ist, derart dass die Absteuerbohrungen nicht verbunden sind.

**4.** Druckventil nach Anspruch 3,
**dadurch gekennzeichnet,**
**dass** der Entlastungsbund (8) einen Anschliff aufweist.

8

**5.** Druckventil nach Anspruch 1,
**dadurch gekennzeichnet,**
**dass** die Querschnittsfläche der Absteuerbohrung (9) des Ventilkörpers (1) größer ist als die Querschnittsfläche der Absteuerbohrung (11) des Ventilzylinders (2).

**6.** Druckventil nach Anspruch 1,
**dadurch gekennzeichnet,**
**dass** die Absteuerbohrung (11) des Ventilzylinders (2) mit einem Druckhalteventil (19) versehen ist, welches einen Dichtsitz (20) und ein eine mit dem Dichtsitz zusammenwirkenden Dichtfläche (21) aufweisendes Dichtelement (22) umfasst, wobei das Dichtelement (22) einerseits durch die Federkraft einer Ventilfeder (23) auf seinen Dichtsitz (20) gedrückt wird, und andererseits durch den Druck des Kraftstoffs in der Absteuerbohrung (11) von seinem Dichtsitz (20) abgehoben werden kann, wodurch das Druckhalteventil in eine zum Saugraum des Pumpenelements hin offene Öffnungsstellung übergeht und Kraftstoff von der Absteuerbohrung in den Saugraum des Pumpenelements strömt.

**7.** Druckventil nach Anspruch 6,
**dadurch gekennzeichnet,**
**dass** das Druckhalteventil (19) einen Öffnungsdruck im Bereich von 20 bis 40 bar aufweist.

**8.** Druckventil nach Anspruch 1,
**dadurch gekennzeichnet,**
**dass** der Ventilzylinder (2) von einer Hülse (24) dicht umgeben ist, welche um den Ventilzylinder (2) drehbar gelagert ist und mit wenigstens einer Drosselbohrung (25) versehen ist, deren Querschnittsfläche kleiner als die Querschnittsfläche der Absteuerbohrung (11) des Ventilzylinders (2) ist, wobei die wenigstens eine Drosselbohrung (25) durch Drehen der Hülse (24) in Gegenüberstellung zur Mündung (26) der Absteuerbohrung (11) gebracht werden kann.

**9.** Druckventil nach Anspruch 1,
**dadurch gekennzeichnet,**
**dass** die Absteuerbohrung (11) des Ventilzylinders (2) in eine Absteuerbohrung (27) des Elementzylinders (12) mündet und der Elementzylinder (12) von einer drehbar gelagerten Hülse (24) dicht umgeben ist, welche mit wenigstens einer Drosselbohrung (25) versehen ist, deren Querschnittsfläche kleiner als die Querschnittsfläche der Absteuerbohrung (27) des Elementzylinders (12) ist, wobei die wenigstens eine Drosselbohrung (25) durch Drehen der Hülse (24) in Gegenüberstellung zur Mündung (28) der Absteuerbohrung (27) des Elementzylinders (12) gebracht werden kann.

**10.** Druckventil nach Anspruch 8 oder 9,
**dadurch gekennzeichnet,**
**dass** die Hülse (24) eine Mehrzahl von Drosselbohrungen (25) mit abnehmenden Querschnittsflächen aufweist.

**Claims**

**1.** Pressure valve of a fuel injection pump in the form of a nozzle valve with constant volume relief for installation in a pressure line for conveying fuel from a pumping chamber of a pumping element of a fuel injection pump to an injection nozzle of a self-ignited internal combustion engine, which comprises:

- a valve holder (14) comprising a connecting channel (15) for connection to the pressure line on the nozzle side and a spring chamber (17) connected thereto with a valve spring (16) located therein,
- a valve cylinder (2) provided with a seal (7) and an axial through hole (3), said cylinder being affixed at its one end in a fluid-tight manner to the valve holder (14) and at its other end to an element cylinder (12) of the pumping element which forms the pumping chamber (13) such that the axial through hole (3) is connected to the spring chamber (17) and to the pumping chamber (13),
- a valve body (1) comprising a sealing surface (6) cooperating with the seat (7), a pressure relief collar (8) disposed on the pump side of the sealing surface (6) and a fuel channel (4, 5), one end of which opens into the pumping chamber (13) and the other end opens on the pump side of the sealing surface (6) on the lateral surface of the valve body (1), wherein the valve body (1) is guided axially displaceably in the through hole (3) of the valve cylinder (2), said valve body is pressed by the spring force of the valve spring (16) onto its seat (7) on the one hand and can be lifted from its seat (7) by the fuel pressure on the pump side on the other hand, whereby the pressure valve is transferred from its closed position into its open position open on the nozzle side,

**characterised in**

**that** the valve body (1) has at least one first spill port (9) which branches off from the fuel channel (4, 5) and that the valve cylinder (2) has a second spill port (11) associated with the spill port (9) of the valve body (1), wherein the fuel flow through the spill ports (9, 11) is throttled, wherein the spill ports (9, 11) are connected in the closed position of the pressure valve or can be connected during the transition into the open position and make a connection between the fuel channel (4, 5) and a suction chamber of the pump element in such a manner that when the discharge stroke of the pump element is initiated, at a lower speed of the internal combustion engine, more fuel is de-energised through the spill ports (9, 11) than at a higher speed so that the pressure valve additionally has the function of a hydraulic injection adjustment.

2. The pressure valve according to claim 1, **characterised in that** the spill ports (9, 11) of the valve body (1) and valve cylinder (2) are coaxial in the closed position of the pressure valve.

3. The pressure valve according to claim 1, **characterised in that** in the closed position of the pressure valve the spill port (11) of the valve cylinder (2) is offset with respect to the spill port (9) of the valve body (1) in the axial direction to the injection nozzle in such a manner that the spill ports are not connected.

4. The pressure valve according to claim 3, **characterised in that** the pressure relief collar (8) has a ground surface.

5. The pressure valve according to claim 1, **characterised in that** the cross-sectional area of the spill port (9) of the valve body (1) is larger than the cross-sectional area of the spill port (11) of the valve cylinder (2).

6. The pressure valve according to claim 1, **characterised in that** the spill port (11) of the valve cylinder (2) is provided with a pressure-retaining valve (19) which comprises a seat (20) and a sealing element (22) which has a sealing surface (21) cooperating with the seat, wherein the sealing element (22) is pressed onto its seat (20) by the spring force of a valve spring (23) on the one hand and can be lifted from its seat (20) by the pressure of the fuel in the spill port (11) on the other hand, whereby the pressure retaining valve goes over into an open position towards the suction chamber of the pump element and fuel flows from the spill port into the suction chamber of the pump element.

7. The pressure valve according to claim 6, **characterised in that** the pressure retaining valve (19) has an opening pressure in the range of 20 to 40 bar.

8. The pressure valve according to claim 1, **characterised in that** the valve cylinder (2) is tightly surrounded by a sleeve (24) which is rotatably mounted about the valve cylinder (2) and is provided with at least one restriction hole (25) whose cross-sectional area is smaller than the cross-sectional area of the spill port (11) of the valve cylinder (2), wherein the at least one restriction hole (25) can be brought into opposition to the mouth (26) of the spill port (11) by turning the sleeve (24).

9. The pressure valve according to claim 1, **characterised in that** the spill port (11) of the valve cylinder (2) opens into a spill port (27) of the element cylinder (12) and the element cylinder (12) is tightly surrounded by a rotatably mounted sleeve (24) which is provided with at least one restriction hole (25) whose cross-sectional area is smaller than the cross-sectional area of the spill port (27) of the element cylinder (12), wherein the at least one restriction hole (25) can be brought into opposition to the mouth (28) of the spill port (27) of the element cylinder (12) by turning the sleeve (24).

10. The pressure valve according to claim 8 or claim 9, **characterised in that** the sleeve (24) comprises a plurality of restriction holes (25) with decreasing cross-sectional areas.

**Revendications**

1. Soupape de pression d'une pompe d'injection de carburant, sous la forme d'une soupape à trou avec dépression à volume constant, destinée à être montée dans une conduite de refoulement pour le transport de carburant d'un espace de pompage d'un élément de pompe d'une pompe d'injection de carburant vers un injecteur d'un moteur à combustion interne à auto-allumage, qui comprend :

   - un support de soupape (14) comprenant un conduit de raccordement (15) devant être relié côté injecteur avec la conduite de refoulement et une chambre de ressort (17) reliée à ce dernier, avec un ressort de soupape (16) situé dans cette dernière,
- un cylindre de soupape (2) muni d'un siège d'étanchéité (7) et d'un trou traversant (3), qui de façon étanche aux fluides est fixé par l'une de ses extrémités sur le support de soupape (14) et par son autre extrémité sur un cylindre (12) de l'élément de pompe formant l'espace de pompage (13), de façon telle que le trou traversant axial (3) soit relié avec la chambre de ressort (17) et avec l'espace de pompage (13),
- un corps de soupape (1) comprenant une surface d'étanchéité (6) coopérant avec le siège d'étanchéité (7), un épaulement de dépression (8) disposé côté pompe de la surface d'étanchéité (6), ainsi qu'un conduit à carburant (4, 5) débouchant par l'une de ses extrémités dans l'espace de pompage (13) et par son autre extrémité côté pompe de la surface d'étanchéité (6) sur la surface latérale du corps de soupape (1), le corps de soupape (1) étant guidé de façon déplaçable en direction axiale dans le trou traversant (3) du cylindre de soupape (2), et étant pressé d'une part sur son siège d'étanchéité (7) par la tension du ressort de soupape (16) et pouvant être soulevé d'autre part de son siège d'étanchéité (7) par la pression du carburant côté pompe, ce qui a pour effet d'amener la soupape de pression de sa position de fermeture dans sa position d'ouverture, ouverte vers le côté injecteur,

**caractérisée en ce que** le corps de soupape (1) comporte au moins un premier trou de dérivation (9) partant du conduit à carburant (4, 5) et **en ce que** le cylindre de soupape (2) comporte un deuxième trou de dérivation (9, 11) associé au trou de dérivation (9) du corps de soupape (1), le flux de carburant étant étranglé par les trous de dérivation (9, 11), les trous de dérivation (9, 11) étant reliés en position de fermeture de la soupape de pression ou pouvant être reliés pendant le passage en position d'ouverture et créant une liaison entre le conduit de carburant (4, 5) et une chambre d'aspiration de l'élément de pompe, de façon telle qu'au début du travail de refoulement de l'élément de pompe, à une basse vitesse de rotation du moteur à combustion interne, plus de carburant soit dérivé par les trous de dérivation (9, 11) qu'à une vitesse de rotation plus élevée, de façon à ce que la soupape de pression dispose en supplément de la fonction d'un ajustement hydraulique de l'injection.

2. Soupape de pression selon la revendication 1,
**caractérisée en ce que** les trous de dérivation (9, 11) du corps de soupape (1) et du cylindre de soupape (2) sont coaxiaux en position de fermeture de la soupape de pression.

3. Soupape de pression selon la revendication 1,
**caractérisée en ce qu'**en position de fermeture de la soupape de pression, le trou de dérivation (11) du cylindre de soupape (2) est déporté en direction axiale vers l'injecteur, par rapport au trou de dérivation (9) du corps de soupape (1), de façon telle que les trous de dérivation ne sont pas reliés.

4. Soupape de pression selon la revendication 3,
**caractérisée en ce que** l'épaulement de décompression (8) comporte une coupe.

5. Soupape de pression selon la revendication 1,
**caractérisée en ce que** la surface de section transversale du trou de dérivation (9) du corps de soupape (1) est supérieure à la surface de section transversale du trou de dérivation (11) du cylindre de soupape (2).

6. Soupape de pression selon la revendication 1,
**caractérisée en ce que** le trou de dérivation (11) du cylindre de soupape (2) est muni d'une soupape de maintien de la pression (19) qui comprend un siège d'étanchéité (20) et un élément d'étanchéité (22) comportant une surface d'étanchéité (21) coopérant avec le siège d'étanchéité, l'élément d'étanchéité (22) étant pressé d'une part par la tension d'un ressort de soupape (23) sur son logement d'étanchéité (20) et pouvant d'autre part être soulevé de son siège d'étanchéité (20) par la pression du carburant dans le trou de dérivation (11), ce qui a pour effet de faire passer la soupape de maintien en pression dans une position d'ouverture ouverte vers la chambre d'aspiration de l'élément de pompe et de faire circuler du carburant du trou de dérivation dans la chambre d'aspiration de l'élément de pompe.

7. Soupape de pression selon la revendication 6,
**caractérisée en ce que** la soupape de maintien en pression (19) présente une pression d'ouverture dans la plage de 20 à 40 bar.

8. Soupape de pression selon la revendication 1,
**caractérisée en ce que** le cylindre de soupape (2) est entouré de façon étanche par une douille (24) qui est logée de façon rotative autour du cylindre de soupape (2) et qui est munie d'au moins un trou d'étranglement (25) dont la surface de section transversale est inférieure à la surface de section transversale du trou de dérivation (11) du cylindre de soupape (2), le au moins un trou d'étranglement (25) pouvant être amené en juxtaposition de l'embouchure (26) du trou de dérivation (11), par rotation de la douille (24).

9. Soupape de pression selon la revendication 1,
**caractérisée en ce que** le trou de dérivation (11) du cylindre de soupape (2) débouche dans un trou de dérivation (27) du cylindre de l'élément (12) et **en ce que** le cylindre de l'élément (12) est entouré de façon étanche par une douille (24) qui est logée de façon rotative, qui est munie d'au moins un trou d'étranglement (25), dont la surface de section transversale est inférieure à la surface de section transversale du trou de dérivation (27) du cylindre de l'élément (12), le au moins un trou d'étranglement (25) pouvant être amené en juxtaposition de l'embouchure (28) du trou de dérivation (27) du cylindre de l'élément (12), par rotation de la douille (24).

10. Soupape de pression selon la revendication 8 ou 9,
**caractérisée en ce que** la douille (24) comporte une pluralité de trous d'étranglement (25) à surfaces de section transversale décroissantes.

EP 1 504 188 B1

# Fig.1

13

Fig.2

**Fig.3**

Fig.4

# Fig.5

Fig.6

Fig.7